# NEUE EUROPÄISCHE PATENTSCHRIFT

(11) **EP 2 225 487 B2**
(45) Veröffentlichungstag und Bekanntmachung des Hinweises auf die Entscheidung über den Einspruch: **23.11.2016**
(45) Hinweis auf die Patenterteilung: 14.08.2013
(21) Anmeldenummer: 07856771.6
(22) Anmeldetag: 15.12.2007
(51) Int. Cl.: F16K 35/02, F16K 21/06

(54) **HEISSWASSERARMATUR**
HOT WATER FAUCET
ROBINET D'EAU CHAUDE

(43) Veröffentlichungstag der Anmeldung: 08.09.2010
(73) Patentinhaber: Grohe AG, 58675 Hemer (DE)
(72) Erfinder: GNAUERT, Werner, 58640 Iserlohn (DE)
(86) Internationale Anmeldenummer: PCT/EP2007/011034
(87) Internationale Veröffentlichungsnummer: WO 2009/076982

(56) Entgegenhaltungen:
- EP-A1- 0 204 882
- EP-A1- 0 778 434
- EP-A2- 1 752 695
- EP-B1- 0 065 266
- DE-A1- 4 308 762
- DE-A1- 19 525 690
- DE-U1- 20 112 725
- GB-A- 277 504
- GB-A- 579 615
- US-A- 3 780 758
- US-A- 5 762 317
- US-A1- 2004 094 736
- US-A1- 2004 164 098
- US-A1- 2006 086 394
- US-B1- 7 100 888

## Beschreibung

Die Erfindung betrifft eine Heißwasserarmatur zum Zapfen von Wasser mit einer Temperatur von über 60° gemäß dem Oberbegriff des Patentanspruchs 1.

Neben Mischwasser- und Thermostatarmaturen sind Heißwasserarmaturen bekannt, die insbesondere kleine Mengen von Wasser oder Wasserdampf mit Temperaturen bis zu 110 ° C abgeben. Die letztgenannten kommen vor allem in Küchen zum Einsatz, wo heißes oder kochendes Wasser speziell in kleinen Mengen zum Brühen von Tee, Kaffee, Pochieren oder ähnlichem verwendet wird. Da aufgrund der hohen Temperaturen die Gefahr von Verbrühungen besteht, ist es erforderlich derartige Armaturen mit bestimmten Sicherungseinrichtungen zu versehen.

Von Thermostatarmaturen ist es bekannt, den Temperaturwählgriff mit einem lösbaren Anschlag zu versehen, so dass der Drehwinkel des Griffs und somit auch die einstellbare Temperatur begrenzt ist. Erst nach dem Lösen des Anschlags kann der Griff in eine Endposition verdreht werden, in der auch Wasser mit höheren Temperaturen gezapft werden kann. Eine derartige Lösung ist beispielsweise aus der DE 201 12 725 U1 bekannt.

Bei Heißwasserarmaturen soll im Gegensatz dazu vermeiden werden, dass das Absperrventil, das das heiße Wasser freigibt, unabsichtlich geöffnet wird. Weiterhin soll vermieden werden, dass heißes Wasser unkontrolliert oder unbeabsichtigt aus der Armatur austritt.

Aus der US 5 762 317 A ist eine Heißwasserarmatur bekannt, bei der eine Sicherheitseinrichtung an der Griffkappe als auch der Ventilschaft des Absperrventils translatorisch bewegt werden. Somit kann das Absperrventil durch zwei nacheinander folgende Druckbewegungen bedient werden.

Ferner sind aus der DE 195 25 690 A1, der GB 277 504 A und der US 2006/ 0086394 A1 Selbstschlussarmaturen bekannt, deren Absperrventil aus einer geöffneten Position selbsttätig in die Schließposition zurückkehrt, da im Griff eine Feder angeordnet ist, die aufgrund ihrer Federspannung den Griff aus einer verdrehten Position in die Ausgangsposition zurück bewegt.

Aufgabe der Erfindung ist es daher, eine Heißwasserarmatur mit Sicherheitseinrichtung zu verbessern, so dass sie die vorgenannten Erfordernisse erfüllt.

Diese Aufgabe wird von einer Armatur mit den Merkmalen des Patentanspruchs 1 erfüllt. Vorteilhafte Weiterbildungen sind Gegenstand der Unteransprüche.

Mit der Erfindung wird eine Heißwasserarmatur zum Zapfen von Wasser mit einer Temperatur von über 60° C, mit einem Absperrventil, das ein Stellglied zur Betätigung eines Ventilverschlusskörpers aufweist, einem Griff, der mit dem Stellglied drehfest verbunden ist und an dem eine Sicherheitseinrichtung vorgesehen ist, wobei der Ventilverschlussköper mittels des Griffes von einer Absperrposition, in der die Sicherheitseinrichtung geschlossen ist, in eine Durchlassposition bewegt werden kann, in der die Sicherheitseinrichtung geöffnet ist, bereitgestellt, bei der der Ventilverschlusskörper aus einer gegenüber der Absperrposition veränderten Lage zu jeder Zeit selbsttätig in die Absperrposition zurückkehrt. Das Absperrventil befindet sich somit im Grundzustand in der geschlossenen Position. Um den Ventilverschlusskörper zu bewegen und das Absperrventil zu öffnen, muss zunächst die Sicherheitseinrichtung betätigt und geöffnet werden. Erst dann kann der Griff und mit diesem der Ventilverschlusskörper bewegt werden. Beim Loslassen des Griffs, bewegt sich dieser und mit diesem der Ventilverschlusskörper in seine Ausgangsposition zurück und das Absperrventil ist wieder verschlossen. Gleichzeitig ist auch die Sicherungseinrichtung wieder verschlossen.

Gemäß der Erfindung ist zwischen Griff und Stellglied ein Adapter drehfest angeordnet. Mittels des Adapters ist zum einen möglich, den Griff verdeckt zu befestigen, so dass von außen kein Befestigungsmittel sichtbar ist. Dazu ist der Adapter vorteilhafterweise aus Kunststoff hergestellt und weist an seinem Mantel eine Riefenverzahnung und an seinem Ende Schnapphaken auf. Der Adapter kann beispielsweise mittels einer Schraube an dem Stellglied des Absperrventils befestigt werden. Anschließend wird der Griff drehfest auf den Adapter aufgeschnappt, so dass über Adapter und Stellglied der Ventilverschlusskörper bewegt werden kann.

Weiterhin bietet der Adapter Raum für zusätzliche Sicherheitseinrichtungen, wie Anschläge und damit in Verbindung stehende Tasten am Griff.

Um den Griff aus einer veränderten Lage wieder selbsttätig in seine Ausgangsposition zurückzubewegen ist dabei zwischen Adapter und dem feststehenden Gehäuse des Absperrventils eine Feder vorgesehen. Diese ist sowohl am feststehenden Gehäuse als auch am Adapter fest fixiert. Gemäß der Erfindung ist dabei als Feder eine zylindrische Schraubenfeder vorgesehen, die beim Öffnen des Absperrventils über die Drehbewegung des Adapters mittels des Griffs eine Torsionsverformung erfährt. Beim Loslassen des Griffs wird die gespeicherte Energie frei und die Feder bewegt sich in ihre Ausgangslage zurück, wodurch auch der an ihr befestigte Adapter und der mit diesem verbundene Griff automatisch eine Drehbewegung erfährt.

Gemäß der Erfindung weist der Griff als Sicherheitseinrichtung im Mantelbereich einen aus seiner Anschlagposition verschiebbaren Anschlagkörper auf, der in seiner Anschlagposition eine Bewegung des Stellglieds verhindert. Dieser kann beispielsweise mittels einer Taste durch eine Öffnung im Mantelbereich des Griffs verschiebbar sein.

Vorteilhafterweise ist der Anschlagkörper entgegen der Kraft einer Feder verschiebbar, so dass beim Loslassen der Taste der Anschlagkörper wieder in eine Position zurückkehrt, in der eine Drehbewegung des Griffs verhindert wird. Wahlweise sind die Anschlagkörper über die mit diesen verbundenen Tasten parallel zum Stellglied oder in radialer Richtung verschiebbar.

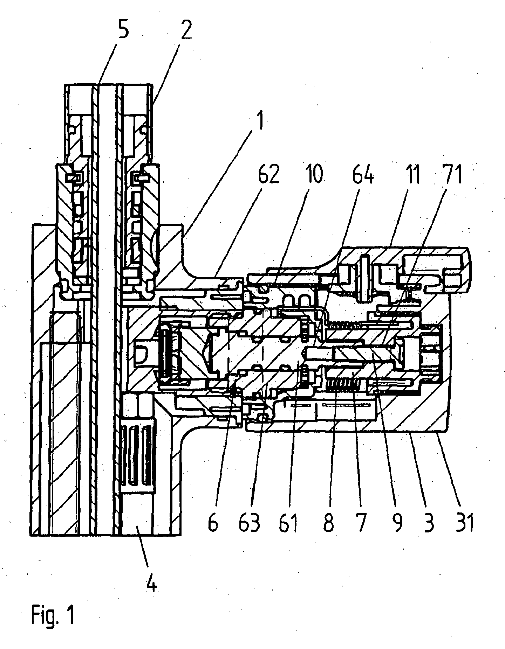

Ein Ausführungsbeispiel der Erfindung ist in der Zeichnung dargestellt und wird im Folgenden näher beschrieben. Es zeigt in der Zeichnung
- Figur 1: einen Teil einer erfindungsgemäße Armatur im Schnitt.

Figur 1 zeigt einen Teil einer Armatur zum Zapfen von Heißwasser. An einem Armaturenkörper 1 ist ein Auslauf 2 befestigt. Senkrecht zum Armaturenkörper 1 und zum Auslauf 2 ist ein Absperrventil 6 mit dazugehörigem Betätigungsgriff 3 angeordnet. Das Absperrventil 6 umfasst zwei keramische Dichtscheiben, die je nach Anordnung ihrer Durchlässe eine Absperrposition oder eine Durchlassposition einnehmen. Zur Betätigung der beweglichen Keramikscheibe, die als Ventilverschlusskörper dient, ist eine Spindel 61 vorgesehen. Diese weist an ihrem der Armatur abgewandten Seite eine Bohrung mit einem Innengewinde 64 auf, die zur Aufnahme einer Schraube 9 dient. Die Schraube 9 fixiert wiederum einen Adapter 7 an der Spindel 61, der eine Durchgangsbohrung 71 aufweist, durch die die Schraube 9 hindurch greift. Die Durchgangsbohrung 71 ist auf der der Spindel 61 zugewandten Seite erweitert, so dass der Adapter 7 formschlüssig auf die Spindel 61 aufgesetzt werden kann. Mit Hilfe der Schraube 9 wird der Adapter 7 drehfest mit der Spindel 61 verbunden. Auf den Adapter 7 kann auf der der Spindel 61 abgewandten Seite die Griffhülle 31 aufgeschnappt werden, so dass hier ebenfalls eine drehfeste Verbindung zwischen Adapter 7 und Griffhülle 31 bzw. Spindel 61 entsteht. Die Griffhülle 31 weist einen Anschlagkörper 10 auf, der mit dem Ventilgehäuse 63 des Absperrventils 6 zusammenwirkt. Zusätzlich ist zwischen Absperrventil 6 und Adapter 7 eine zylindrische Feder 8 angeordnet deren eines Ende am Ventilgehäuse 63 und deren zweites Ende am Adapter 7 fest fixiert ist.

Zur Betätigung der Armatur und zum Öffnen des Absperrventils 6 muss zunächst der Anschlagkörper 10 aus seiner Anschlagposition gelöst werden. Diese geschieht indem eine Taste, die durch die Griffhülle 31 hindurch mit dem Anschlagkörper 10 verbunden ist, parallel zur Achse der Griffhülle 31 verschoben wird, so dass der Anschlagkörper 10 aus seiner Anschlagposition gelöst und der Griff 3 mit der drehfest verbundenen Spindel 61 entriegelt ist. Beim Verdrehen des Griffes 3 wird aufgrund der fest fixierten Enden der Feder 8 auf die Feder 8 ein Torsionsmoment aufgebracht und somit Energie gespeichert. Beim Loslassen des Griffs 3 wird die Energie wieder frei und die Feder 8 bewegt sich in ihre Ausgangslage zurück und bewegt den Griff 3 sowie die Spindel 61 mit sich. Dies bedeutet, dass das Absperrventil 6 nach dem Loslassendes Griffs 3 immer in die Absperrposition zurückkehrt, so dass kein Wasser unkontrolliert austreten kann.

## Patentansprüche

1. Heißwasserarmatur zum Zapfen von Wasser mit einer Temperatur von über 60° C, mit
- einem Absperrventil (6),
-- das ein Stellglied (61) zur Betätigung eines Ventilverschlusskörpers (62) aufweist,
- einem Griff (3),
-- der mit dem Stellglied (61) drehfest verbunden ist,
-- an dem eine Sicherheitseinrichtung vorgesehen ist,
wobei der Ventilverschlussköper (62) mittels des Griffes (3) von einer Absperrposition, in der die Sicherheitseinrichtung geschlossen ist, in eine Durchlassposition bewegt werden kann, in der die Sicherheitseinrichtung geöffnet ist und der Ventilverschlusskörper (62) aus einer gegenüber der Absperrposition veränderten Lage selbsttätig in die Absperrposition zurückkehrt,
**dadurch gekennzeichnet, dass**
der Griff (3) als Sicherheitseinrichtung im Mantelbereich (31) einen aus seiner Anschlagposition bewegbaren Anschlagkörper (10) aufweist, der in seiner Anschlagposition ein Drehbewegung des Griffs (3) und eine Bewegung des Stellglieds (61) verhindert, so dass zum Öffnen des Absperrventils (6) zunächst des Anschlagkörper (10) aus seiner Anschlagposition gelöst werden muß und zur selbsttätigen Zurückbewegung des Griffes in seine Ausgangsposition zwischen Griff (3) und Stellglied (61) ein Adapter (7) drehfest angeordnet ist, wobei zwischen Adapter (7) und einem feststehenden Gehäuse (63) des Absperrventils (6) eine zylindrische Schraubenfeder vorgesehen ist, die beim Öffnen des Absperrventils (6) über die Drehbewegung des Adapters mittels des Griffes eine Torsionsverformung erfährt und sich beim Loslassen des Griffes (3) in ihre Ausgangslage zurückbewegt, wobei der Anschlagkörper (10) mittels einer Taste (11) durch eine Öffnung im Mantelbereich (31) des Griffs (3) bewegbar ist.

2. Heißwasserärmätur gemäß Anspruch 1, dadurch gekenntzeichnet, dass der Anschlagkörper (10) entgegen der Kraft einer Feder bewegbar ist.

3. Heißwasserarmatur gemäß einem der Ansprüche 1 oder 2, **dadurch gekennzeichnet, dass** der Anschlagkörper (10) parallel zum Stellglied (61) bewegbar ist.

4. Heißwasserarmatur gemäß einem der Ansprüche 1 oder 2, **dadurch gekennzeichnet, dass** der Anschlagkörper (10) bei einem zylindrischen Griff (3) in radialer Richtung bewegbar ist.

## Claims

1. Hot water fitting for dispensing water at a temperature above 60°C, having
- a shut-off valve (6),
-- which has a control member (61) for operating a valve closure element (62),
- a knob (3),
-- which is connected to the control member (61) for conjoint rotation therewith and
-- on which a safety device is provided,
wherein the valve closure element (62) can be moved by means of the knob (3) from a shut-off position, in which the safety device is closed, into an outflow position, in which the safety device is open, and the valve closure element (62) returns automatically to the shut-off position from a position other than the shut-off position,
**characterised in that**
the knob (3) has in its wall region (31), as safety device, a stop element (10) which is movable out of its stop position and which, in its stop position, prevents rotational movement of the knob (3) and movement of the control member (61), so that to open the shut-off valve (6) the stop element (10) must first be released from its stop position, and to effect the automatic return movement of the knob to its starting position an adapter (7) is arranged between the knob (3) and the control member (61) for conjoint rotation therewith, there being provided between the adapter (7) and a fixed housing (63) of the shut-off valve (6) a cylindrical helical spring which, when the shut-off valve (6) is opened, undergoes torsional deformation by way of the rotational movement of the adapter by means of the knob and, when the knob (3) is released, moves back into its starting position, the stop element (10) being movable by means of a button (11) through an opening in the wall region (31) of the knob (3).

2. Hot water fitting according to claim 1, **characterised in that** the stop element (10) is movable against the force of a spring.

3. Hot water fitting according to claim 1 or 2, **characterised in that** the stop element (10) is movable parallel to the control member (61).

4. Hot water fitting according to claim 1 or 2, **characterised in that**, in the case of a cylindrical knob (3), the stop element (10) is movable in the radial direction.

## Revendications

1. Robinet d'eau chaude pour distribuer de l'eau à une température supérieure à 60°C, comportant :
- une soupape d'arrêt (6),
-- qui comporte un organe de réglage (61) pour permettre d'actionner un corps de fermeture de la soupape (62),
- une poignée (3),
-- qui est reliée solidairement en rotation à l'organe de réglage (61),
-- sur laquelle est prévu un dispositif de sécurité,
le corps de fermeture de la soupape (62) pouvant être déplacé au moyen de la poignée (3) d'une position de blocage dans laquelle le dispositif de sécurité est fermé dans une position de passage dans laquelle le dispositif de sécurité est ouvert, et
le corps de fermeture de la soupape (62) est ramené automatiquement dans la position de blocage, à partir d'une position différente de la position de blocage,
**caractérisé en ce que**
la poignée (3) comporte, en tant que dispositif de sécurité, dans la zone de son enveloppe (31) un corps formant butée (10) pouvant être déplacé de sa position en butée, et qui empêche, dans cette position en butée une rotation de la poignée (3) et un déplacement de l'organe de réglage (61) de sorte, que pour permettre d'ouvrir la soupape d'arrêt (6) le corps formant butée (10) doive tout d'abord être extrait de sa position en butée, et, pour permettre le retour automatique de la poignée dans sa position de départ, un adaptateur (7) est monté solidairement en rotation entre la poignée (3) et l'organe de réglage (61), entre l'adaptateur (7) et un boitier fixe (63) de la soupape d'arrêt (6) étant prévu un ressort hélicoïdal cylindrique qui, lors de l'ouverture de la soupape d'arrêt (6) est soumis par la rotation de l'adaptateur au moyen de la poignée à une déformation de tension, et qui retourne dans sa position de départ lors du relâchement de la poignée (3), et le corps formant butée (10) pouvant être déplacé au moyen d'une touche (11) au travers d'une ouverture dans la zone enveloppe (31) de la poignée (3).

2. Robinet d'eau chaude conforme à la revendication 1,
**caractérisé en ce que**
le corps formant butée (10) peut être déplacé contre la force d'un ressort.

3. Robinet d'eau chaude conforme à l'une des revendications 1 et 2,
**caractérisé en ce que**
le corps formant butée (10) peut être déplacé parallèlement à l'organe de réglage (61).

4. Robinet d'eau chaude conforme à l'une des revendications 1 et 2,
**caractérisé en ce que**
dans le cas d'une poignée cylindrique (3) le corps formant butée (10) peut être déplacé en direction radiale.
